(19) Europäisches Patentamt
European Patent Office
Office européen des brevets

(11) Publication number : **0 374 894 B1**

(12) **EUROPEAN PATENT SPECIFICATION**

(45) Date of publication of patent specification :
12.04.95 Bulletin 95/15

(51) Int. Cl.⁶ : **H01M 10/34,** H01M 10/12,
H01M 10/10

(21) Application number : 89123573.1

(22) Date of filing : 20.12.89

(54) Sealed tubular lead-acid battery.

(30) Priority : 21.12.88 JP 323027/88

(43) Date of publication of application :
27.06.90 Bulletin 90/26

(45) Publication of the grant of the patent :
12.04.95 Bulletin 95/15

(84) Designated Contracting States :
DE FR GB IT

(56) References cited :
FR-E- 9 373
GB-A- 272 916
GB-A- 787 872
US-A- 2 892 247
Ullmanns Enzyklopädie der technischen
Chemie, vol. 21. p. 452
PATENT ABSTRACTS OF JAPAN, vol. 11, no.
363 (E-560)[2810], 26th November 1987; &
JP-A-62 136 751
PATENT ABSTRACTS OF JAPAN, vol. 11, no.
92 (E-491)[2539], 24th March 1987; & JP-A-61
245 470
PATENT ABSTRACTS OF JAPAN, vol. 13, no.
38 (E-709)[3386], 27th January 1989; & JP-A-63
237 365
PATENT ABSTRACTS OF JAPAN, vol. 11, No.
217 (E-523)(2664), 14th July 1987; and JP-A-62
37 882

(73) Proprietor : **Japan Storage Battery Company
Limited
No. 1 Inobaba-cho
Nishinosho, Kisshoin
Minami-ku Kyoto-shi Kyoto (JP)**

(72) Inventor : **Shiomi, Masaaki Japan Storage
Battery Co. Ltd.
No. 1, Inobaba-cho
Nishinosho
Kisshoin
Minami-ku Kyoto-shi Kyoto (JP)**
Inventor : **Hayashi, Toshiaki Japan Storage
Battery Co. Ltd.
No. 1, Inobaba-cho
Nishinosho
Kisshoin
Minami-ku Kyoto-shi Kyoto (JP)**
Inventor : **Takahashi, Katsuhiro Japan Storage
Battery Co. Ltd
No. 1, Inobaba-cho
Nishinosho
Kisshoin
Minami-ku Kyoto-shi Kyoto (JP)**

(74) Representative : **Patentanwälte Grünecker,
Kinkeldey, Stockmair & Partner
Maximilianstrasse 58
D-80538 München (DE)**

## Description

The present invention relates to an improvement on sealed lead-acid batteries using tubular positive plates.

In tubular positive plates, the active material for the positive electrode is encased in a tube and compressed from every side so that it will not be shed during charge and discharge cycles. Thus, lead-acid batteries using tubular positive plates are generally known to have a better cycle life performance than those using pasted electrode plates. it is also known that such tubular lead-acid batteries can be sealed by causing in situ gelation of a dilute sulfuric acid solution to which an inorganic oxide such as $SiO_2$ or $Al_2O$ has been added.

The gelled electrolyte described above and disclosed by JP-A-62/37882 or FR-A-9373 has the sulfuric acid content immobilized within the gel so tightly that it will not diffuse easily. According to JP-A-62/37882 a dilute sulfuric acid electrolytic solution is gelatinized with silica particles. A separating body between a positive electrode and a negative electrode plate is composed of glass fibre having an average diameter of less than 5 $\mu$. The silica particles used for the gelled electrolyte have a diameter of less than 100 m$\mu$m. According to FR-A-9373 the battery disclosed uses a powder-like material and gelatinized silica. As an example for the powder-like material, pumice is mentioned. To improve the battery with a gelatinized electrolyte a bit of the powder-like material is added into the gel to prevent the gel from breaking.

According to US-A-2892247 and GB-A-787872 a powder such as diatomaceous earth, which consists of a fine silica powder, each particle of which is microporous is used. Such fine silica powder leads to a gelatinized electrolyte, whereby silica is added in an electrolyte since silica is an oxide having a large surface area so that it easily retains the electrolyte and is not harmfull to the battery. However, when powder of silica or the like having small particle diameters added in a battery, the surface area of silica per electrolyte is high so that capacity for retaining electrolyte is increased. In general, silica used for gelatinizing an electrolyte has a diameter less than 100 m$\mu$m as disclosed by JP-A-62/37882. In case that the particle diameter is small, capacity for retaining electrolyte is remarkable increased, whereby the electrolyte is gelatinized. However, in a gelled-type battery, the electrolyte is strongly attracted by the silica so that movement of the electrolyte becomes slow and the discharging capacity is lowered. Further, as the battery is subjected to repeated charge and discharge cycles, a crack or a large hole will form in the gelled electrolyte to reduce the contact area with the positive plate. If this occurs, the positive active material will deteriorate rapidly since it undergoes local charge and discharge at a high current density. Thus, batteries using a gelled electrolyte has suffered the disadvantage that their cycle life performance is greatly inferior to that of batteries using a liquid electrolyte.

It is, therefore, an object of the invention to improve the high-rate discharging performance and cycle life of a sealed lead-acid battery using a tubular positive plate.

The object is achieved by the features of claims 1 or 2. According to the invention the particle diameter is 10 to 500 $\mu$m, which is about 1000 times as large as the silica used for the gelled-type battery. Accordingly, silica granules having a large particle diameter, formed by granulating silica powder, is used. The granulated silica keeps the original feature of silica power of high capacity for retaining electrolyte to some extend, so that the moving speed of the electrolyte is high and stratification of the electrolyte can be prevented.

Moreover, if silica is used with an even greater diameter up to 1000 $\mu$m the electrolyte offers improved life performance when 0.1 to 9 wt % of colloidal silica is added to the electrolyte as a thickener. Such an addition of colloidal silica is also useful to improve the cycle life of the battery in case the plate height exceeds 100 mm.

According to the invention a sealed lead-acid battery of a "retainer type" is fabricated in which the granules of fine particles of silicon dioxide are loaded both in a gap between a separator and around each of a positive and a negative plate, as well as around the assembled element comprising the separator and the plates. An electrolyte is retained in the positive plate, the negative plate, the separator and the granules of fine silicon dioxide particles.

In "Ullmanns Enzyklopädie der technischen Chemie", volume 21, page 452, the production and composition of diatomite is described. Such natural diatomit has been built during several milleniums by deposition of sediments of silica alga. Such diatomite is sedimented in the form of disks, tubes, cylinders etc. Moreover, the diatomite contains sand, aluminum, calcium, iron and other metals in different quantities and it may contain sulphur, organic substances etc.

Fig. 1 is a cross-sectional view showing the essential part of the sealed tubular lead-acid battery of the present invention;

Fig. 2 is a diagram showing the profiles of the discharge product $PbSO_4$ distribution at the positive plate;

Fig. 3 is a characteristic diagram showing the discharge capacity and cycle life of a battery vs. the particle size of $SiO_2$ granules loaded in the battery;

Fig. 4 is a characteristic diagram showing the relationship between the content of colloidal silica in the electrolyte and the cycle life of the battery;

Fig. 5 is a characteristic diagram showing the relationship between the height of electrode plates and the cycle life of the battery; and

Fig. 6 is a characteristic diagram showing the relationship between the content of colloidal silica in the electrolyte in batteries of the present invention having a plate height of 1000 mm and the cycle life of the batteries.

## Detailed Description of the Preferred Embodiment

The lead-acid battery of the present invention is described hereunder with reference to the accompanying drawings.

## Example 1

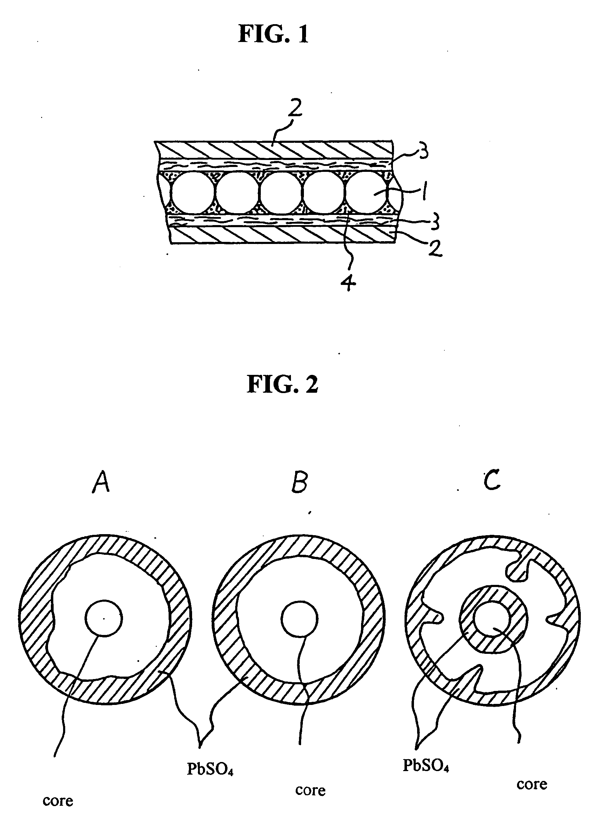

Fig. 1 is a cross-sectional view showing the essential part of the sealed tubular lead-acid battery of the present invention. As shown, it comprises a tubular positive plate 1, a pasted negative plate 2, a separator 3 and loaded granules of the fine particles of silicon dioxide 4, with an electrolyte being absorbed and retained by the assembled element and the $SiO_2$ granules.

Three tubular positive plates and four pasted negative plates, each having a height of 70 mm, were assembled into an element. Individual positive and negative plates were isolated by a separator in the form of a sheet of glass fibers having an average diameter of 5 $\mu$m. Silicon dioxide particles granulated to an average particle size of about 100 $\mu$m were loaded into the gap between electrode plates and around the assembled element; diluted sulfuric acid was injected to fabricate a retainer type battery A of the present invention from which a free liquid electrolyte was substantially absent. As a comparison, an opened liquid electrolyte type battery B and a gelled electrolyte type battery C were fabricated by injecting dilute sulfuric acid or dilute sulfuric acid containing 12% colloidal silica but without loading granules of silicon dioxide particles.

The battery samples thus fabricated were subjected to an initial capacity test (2HR) and a charge/discharge cycle test (75% depth of discharge; 110% amount of charge) to evaluate their performance. The test results are shown in Table 1 below.

## Table 1

| Battery | Initial discharge capacity(2HR A·h) | Number of cycles required for the discharge capacity to drop to 70% or below |
|---|---|---|
| A | 30 | 1000 |
| B | 31 | 1000 |
| C | 23 | 600 |

As is clear from Table 1, battery A of the present invention had an initial capacity which was about 30% higher than conventional gelled electrolyte type battery C. Further, its cycle life was about twice as long as that of battery C. The performance of battery A was almost comparable to that of battery B using a liquid electrolyte. In order to determine the reason for the superiority of the sample of the present invention, batteries A, B and C, which had undergone 500 charge/discharge cycles, were partly disassembled after being discharged. The distribution of $PbSO_4$ distribution in each battery is shown in Fig. 2. As shown in Fig. 2, $PbSO_4$ had formed uniformly at the positive plates of batteries A and B, whereas the $PbSO_4$ distribution in battery C was considerably nonuniform, with it concentration being particularly high in the neighborhood of the grid.

It is thus clear that the electrolyte made uniform contact with the positive plates to cause uniform discharge in both batteries A and B. However, uniform discharge did not occur in battery C probably because the electrolyte made only partial contact with the positive plates.

Example 2

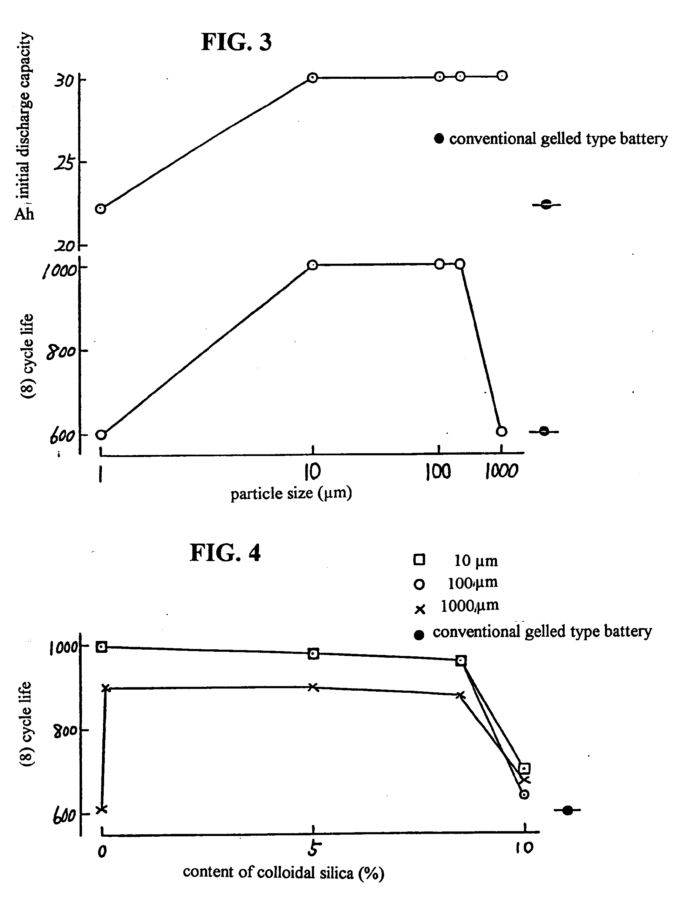

Some other batteries were fabricated by repeating the procedure of manufacturing the battery A in Example 1, except that the average particle size of the granules of fine silicon dioxide particles was varied over the range of 1- 100 $\mu$m and that the concentration of colloidal silica in dilute sulfuric acid was varied from 0 to 10 wt %. The reason why colloidal silica was put into the electrolyte is to prevent stratification phenomenon by increasing the viscosity of electrolyte. That is already described in JP-A-62/37882. In this patent, it is put into the starred electrolyte type (using glass fibre mat separator). We have elucidated if colloidal silica is also effective for preventing stratification in the batteries using granulated silica. The batteries so fabricated were subjected to the same tests as in Example 1. The results are shown in Figs. 3 and 4. Fig. 3 is a characteristic diagram showing the discharge capacity and cycle life of the battery vs. the particle size of the $SiO_2$ granules, and Fig. 4 is a characteristic diagram showing the relationship between the content of colloidal silica in electrolyte and the cycle life of the battery. When the particle size of $SiO_2$ granules was outside the range of 10 - 500 $\mu$m, the discharge capacity and cycle life performance of battery dropped considerably. The battery that used $SiO_2$ granules larger than 500 $\mu$m and which had no colloidal silica added to the electrolyte offered poor life performance probably because the excessively large particles were insufficiently loaded in the gap between each electrode plate and the separator to retain the electrolyte, thus leading to "stratification" of electrolyte, a phenomenon in which different concentrations of electrolyte occurred as the number of charge/discharge cycles increased. However, when 0.1 - 9 wt% of colloidal silica was added as a thickener to the electrolyte, the battery's cycle life performance was markedly improved over the conventional gelled electrolyte type battery. The battery loaded with $SiO_2$ granules smaller than 10 $\mu$m also had low performance since the particle size was too small to insure thorough permeation by the electrolyte. It would, however, be possible to solve this problem by evacuating the battery while the electrolyte is injected or reducing the packing density of $SiO_2$ granules.

Example 3

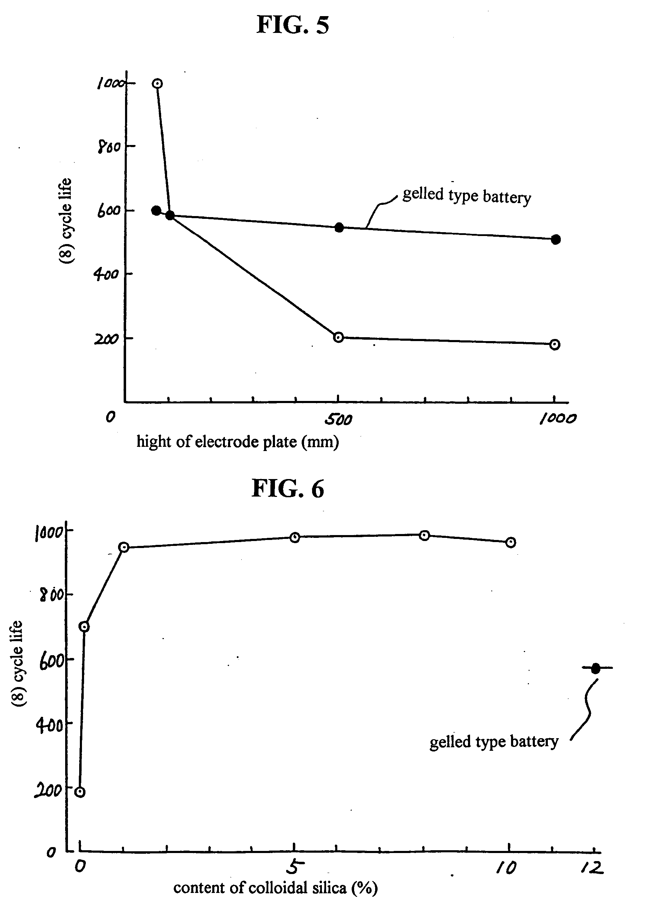

Additional batteries were fabricated by repeating the procedure of manufacturing the battery A in Example 1, except that the height of electrode plates was varied from 70 to 1000 mm. The cycle life performance of the thus fabricated batteries was evaluated in comparison with the conventional gelled electrolyte type battery. The results are shown in Fig. 5 which is a characteristic diagram showing the relationship between the plate height and cycle life of the battery. As one can see from Fig. 5, the cycle life became very short, and was even shorter than that of the gelled electrolyte type battery, when the plate height exceeded 100 mm. This is probably because "stratification" of the electrolyte occurred as the plate height increased. To verify this assumption, batteries having a plate height of 1000 mm were fabricated with the content of colloidal silica in the electrolyte being varied from 0 to 10 wt%. The results are shown in Fig. 6 which is a characteristic diagram showing the relationship between the colloidal silica content and the cycle life of the battery. With 0.1 wt% or more colloidal silica being added, the cycle life was markedly improved and even longer than the gelled electrolyte type battery.

In Examples 1 - 3, the separator was made of glass fibers having an average diameter of 5$\mu$m, but the present inventors confirmed that performance, better than that of the conventional gelled electrolyte type battery, was also attained even when glass fibers of which the range of an average diameter is 0.5 - 30$\mu$m or a synthetic resin separator or a pulp separator was used. Furthermore, in examples 1 - 3 the similar particle size of $SiO_2$ granules was loaded, but even when the mixture of granules having a variety of particle size of 10 - 500$\mu$m was used, the performance was better than that of gelled type battery.

As described on the foregoing pages, the sealed tubular lead-acid battery of the present invention offers markedly improved discharge capacity and cycle life over the prior art.

## Claims

1. A sealed tubular non-gel type lead-acid battery comprising an element including a tubular positive plate, a negative plate and a separator between said plates, therein granules of fine particles of silicon dioxide having an average diameter of 10 - 500 um are loaded in a gap between said separator and each of said plates and around said element, and an electrolyte is retained in said element and said granules.

2. A sealed tubular non-gel type lead-acid battery comprising an element including a tubular positive plate, a negative plate and a separator between said plates, therein granules of fine particles of silicon dioxide having an average diameter of 10 - 1000 um are loaded in a gap between said separator and each of said plates and around said element, an electrolyte is retained in said element and said granules, and said electrolyte includes dilute sulphuric acid containing 0.1 to 9 wt % of one of colloidal silica and alumina.

3. A sealed tubular lead-acid battery according to Claim 1, wherein a height of said plates exceeds 100 mm and said electrolyte includes dilute sulphuric acid containing at least 0.1 wt % of one of colloidal silica and alumina.


## Patentansprüche

1. Verschlossene Blei-Säurebatterie vom Nichtgeltyp mit einem Bauteil, welches eine rohrförmige positive Elektrode, eine negative Elektrode und einen Seperator zwischen den Elektroden aufweist, wobei Körnchen aus kleinen Teilen von Siliciumdioxid mit einem mittleren Durchmesser von 10 - 500μm in einer Lücke zwischen dem Seperator und jeder der Elektroden und um das Bauteil herum angeordnet sind und eine Elektrolyt in dem Bauteil und den Körnchen enthalten ist.

2. Verschlossene Blei-Säurebatterie vom Nichtgeltyp mit einem Bauteil, welches eine rohrförmige positive Elektrode, eine negative Elektrode und einen Seperator zwischen den Elektroden aufweist, wobei Körnchen aus kleinen Teilen von Siliciumdioxid mit einem mittleren Durchmesser von 10 - 1000μm in einer Lücke zwischen dem Seperator und jeder der Elektroden und um das Bautei herum angeordnet sind und ein Elektrolyt in dem Bauteil und den Körnchen enthalten ist, wobei der Elektrolyt eine verdünnte Schwefelsäure mit einem Anteil von 0,1 - 9 Gewichtsprozent von koloidaler Kieselerde oder Alaunerde enthält.

3. Verschlossene Blei-Säurebatterie nach Anspruch 1, **dadurch gekennzeichnet**, daß eine Höhe der Elektroden größer als 100 mm ist und der Elektrolyt eine verdünnte Schwefelsäure mit wenigstens 0,1 Gewichtsprozent von koloidaler Kieselerde oder Alaunerde enthält.


## Revendications

1. Batterie au plomb scellée tubulaire de type non gel comprenant un élément présentant une plaque positive tubulaire, une plaque négative et un séparateur entre lesdites plaques, à l'intérieur de laquelle des granulés de fines particules de silice présentant un diamètre moyen de 10-500 μm sont chargés dans un espace entre ledit séparateur et chacune desdites plaques et autour dudit élément, et un électrolyte est retenu dans ledit élément et lesdits granulés.

2. Batterie au plomb scellée tubulaire de type non gel comprenant un élément présentant une plaque positive tubulaire, une plaque négative et un séparateur entre lesdites plaques, à l'intérieur de laquelle des granulés de fines particules de silice présentant un diamètre moyen de 10-1 000 μm sont chargés dans un espace entre ledit séparateur et chacune desdites plaques et autour dudit élément, un électrolyte est retenu dans ledit élément et lesdits granulés et ledit électrolyte comprend de l'acide sulfurique dilué contenant 0,1 à 9% en poids de silice ou d'alumine colloïdale.

3. Batterie au plomb scellée tubulaire selon la revendication 1, dans laquelle une hauteur desdites plaques dépasse 100 mm et ledit électrolyte comprend de l'acide sulfurique dilué contenant au moins 0,1% en poids de silice ou d'alumine colloïdale.

## FIG. 1

## FIG. 2

A          B          C

PbSO₄        PbSO₄

core        core        core

## FIG. 3

● conventional gelled type battery

Ah | initial discharge capacity

(8) cycle life

particle size (μm)

## FIG. 4

□ 10 μm
○ 100 μm
✕ 1000 μm
● conventional gelled type battery

(8) cycle life

content of colloidal silica (%)

# FIG. 5

(8) cycle life

gelled type battery

hight of electrode plate (mm)

# FIG. 6

(8) cycle life

gelled type battery

content of colloidal silica (%)